# EUROPEAN PATENT APPLICATION

(11) **EP 0 553 486 A1**
(43) Date of publication of application: **04.08.1993**
(21) Application number: 92121940.8
(22) Date of filing: 23.12.1992
(51) Int. Cl.: B29C 45/26

(54) **Tooling and process for moulding polymeric materials in the liquid state**

(30) Priority: 31.01.1992 IT MI920193
(71) Applicant: CENTRO SVILUPPO SETTORI IMPIEGO S.r.l., I-20121 Milan (IT)
(72) Inventor: Bonari, Roberto, I-20023 Cerro Maggiore, Milano (IT); Cocca, Vincenzo, I-20032 Cormano, Milano (IT)
(74) Representative: Zanoli, Enrico

(57) **Abstract**

A tooling for moulding polymeric materials in the liquid state comprises a pressurizable tight-sealing gasket (14) contained inside a recessed seat (13) of annular shape provided in either of the two half-moulds (10a,10b).

## Description

The present invention relates to a tooling for moulding polymeric materials in the fluid state, as well as to a moulding process using said tooling.

In particular, the present invention relates to a moulding tooling comprising two half-moulds suitable for being fastened to each other with a tight seal being developed, with the interposition of a tightly sealing gasket of annular shape.

By "polymeric material in the fluid state", as this term is used in the instant disclosure and in the appended claims, all those resin types are meant, which are used in the moulding technology known as "Resin Transfer Moulding" ("RTM"), in which a catalysed thermosetting resin in the state of a low-viscosity liquid is fed to the hollow (defined between said half-moulds), preferably containing reinforcer fibres.

The definition of "polymeric material in the fluid state" also comprises those mixtures of liquid components which, once injected into the mould hollow containing the reinforcer fibres, react with each other in order to yield a solid product (a technology known as "Structural Reaction Injection Moulding", in short form, "SRIM").

The annular tightly sealing gaskets used in the toolings known from the prior art, and suitable for preventing polymer from leaking from the mould, are normally made with low-hardness siliconic resin, and are contained inside a ring-like recessed seat provided in one of said half-moulds, and so arranged as to surround the hollow provided in said half-mould. With such gasket types known from the prior art, the value of half-mould sealing pressure is high and cannot be easily modified.

In fact, in order to change such a value, for example, the depth of the recessed gasket seat (with the gasket being the same), or the cross-sectional surface area of the gasket (with the depth of recessed gasket seat being the same), or the hardness of the material, should be modified. Furthermore, according to the technology known from the prior art, the above said type of gaskets "work" with a rather limited portion thereof (i.e., with their portion which protrudes outwards from the recessed seat).

A further drawback displayed by the type of gaskets known from the prior art, is that any possible changes in position of mould sealing plane (for example, due to constructional tolerances or to press shifts during the moulding steps) cause different degrees of gasket tightness. Furthermore, the gaskets are subject to a considerable wear, because they undergo both compression forces and shear forces transmitted by the walls of the recessed seats.

The purpose of the present invention is of supplying a tooling of the type as specified at the beginning of the disclosure, which makes it possible the above said drawbacks to be overcome in a simple and cheap way.

According to the present invention, such a purpose is achieved thanks to the sealing gasket being pressurizable and being provided with means for being connected with pressure generating means.

The sealing gasket preferably has a cross-section of tubular character, and is connected with a source of compressed air.

Thanks to such features, the value of pressure can be defined in advance, which is necessary in order to achieve the desired sealing tightness, and furthermore keep constant such a value also in the case of changes in position of the mould sealing plane. The outline of the tubular gasket allows the sealing plane to move along a wider stroke range, with the sealing pressure being constant.

With the tooling according to the present invention, the mould sealing pressure can be varied during the moulding steps, for example, in order to allow possible contained gases, which would endanger a perfect filling of mould hollow, to be vented.

Further advantages and characteristics of the tooling according to the present invention, and of the moulding process which uses such a tooling, will be evident from the following disclosure in detail, supplied for merely illustrative, non-limitative exemplary purposes, and made by referring to the accompanying drawings, in which:
Figure 1 shows a cross sectional view of a moulding tooling according to the present invention, in an operating configuration;
Figure 2 shows a detail, on an enlarged scale, of Figure 1;
Figure 3 is analogous to Figure 2 and illustrates a detail of the tooling in a rest configuration (open mould); and
Figure 4 shows a schematic plan view of a half-mould, and of the relevant gasket.

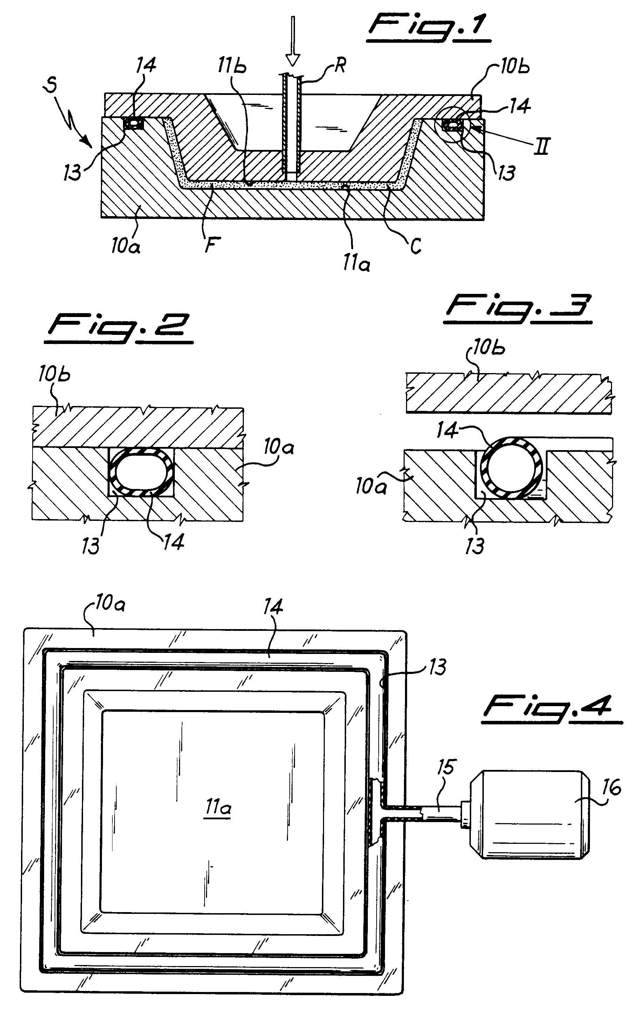

Referring to the drawings, with S a mould is generally indicated, which is used in RTM technology. The mould S comprises a bottom half-mould 10a and a top half-mould 10b, facing each other and suitable for being approached to/moved away from each other, in a per se known way, during the moulding steps. Each of the half-moulds 10a and 10b is provided with a contoured hollow, 11a and 11b respectively, so as to define, when the mould S is closed, as illustrated in Figure 1, an internal hollow C into which a resin R is destined to be injected. The hollow C of the mould S can contain reinforcer fibres F which will be impregnated by the resin at moulding time.

The bottom half-mould 10a is provided, on its flat surface which surrounds the hollow 11a, an annular recessed seat 13 having a substantially "U"-shaped outline and containing a flexible, toroidal, hollow gasket 14. The gasket 14, made, e.g., of an elastomeric material, is connected, by means of a pipe 15, with a pressure regulator 16 equipped with a timer, thanks to which the profile of pressure of compressed air inside the gasket 14 can be controlled over time, in connection with the various moulding steps.

A first type of regulation of pressure inside the interior of the sealing gasket (14) entails the pressurization of said gasket after the closure of the mould, and before the injection of the resin; prior to the subsequent opening of said half-moulds, the pressure inside the gasket is released. A second type of regulation of the pressure over time entails, after the injection of the resin, a temporary depressurization of the gasket, in order to allow the gases enclosed inside the hollow C of the mould S, to be vented. It will be clear that the pressure regulator 16 is connected with the moulding equipment control system, in order that its operation may be coordinated with the various moulding steps.

## Claims

1. Tooling for moulding polymeric materials in the liquid state, of the type comprising two half-moulds suitable for being closed and fastened to each other with a tightly seal being developed, with the interposition of a tightly sealing gasket of annular shape, characterized in that said sealing gasket (14) is pressurizable and is provided with means for being connected with pressurizing means (16).

2. Tooling according to claim 1, characterized in that the sealing gasket (14) has a cross-section of tubular character, and is suitable for being connected with a source of compressed air.

3. Tooling according to claim 2, characterized in that between the gasket (14) and the source of compressed air, means (16) for pressure regulation are interposed.

4. Tooling according to any of the preceding claims, characterized in that the gasket (14) is housed inside an annular recessed seat (13) provided in one of the half-moulds (10a).

5. Process for moulding the polymeric materials in the fluid state, inside a hollow defined by two mobile half-moulds facing each other, between which an annular tightly sealing gasket suitable for preventing polymeric material from escaping from said hollow in interposed, characterized in that said gasket is pressurized at moulding time, in order to obtain the desired sealing pressure.

6. Process according to claim 5, characterized in that the gasket inflating pressure, in the closed configuration of said half-moulds, is varied during the moulding.

7. Process according to claim 6, characterized in that, in the closed configuration of said half-moulds, and after the injection of the material into the hollow defined between said half-moulds, the gasket is temporarily depressurized in order to allow the gases possibly enclosed inside said hollow, to be vented to the outside.
